# EUROPÄISCHE PATENTSCHRIFT

(11) **EP 1 925 926 B1**
(45) Veröffentlichungstag und Bekanntmachung des Hinweises auf die Patenterteilung: **10.06.2015**
(21) Anmeldenummer: 07117525.1
(22) Anmeldetag: 28.09.2007
(51) Int. Cl.: G01N 15/06, G01N 27/04, G01N 27/12

(54) **Vorrichtung und Verfahren zur Überprüfung der Funktionsfähigkeit bzw. zur Plausibilisierung eines auf einem Elektrodensystem basierenden Sensors**
Device and method for monitoring the operational capability or validation of a sensor based on an electrode system
Dispositif et procédé de vérification de la capacité fonctionnelle ou de la vraisemblance d'un capteur basé sur un système à électrodes

(30) Priorität: 24.11.2006 DE 102006055520
(43) Veröffentlichungstag der Anmeldung: 28.05.2008
(73) Patentinhaber: ROBERT BOSCH GMBH, 70442 Stuttgart (DE)
(72) Erfinder: Zimmermann, Stefan, 76327, Pfinztal (DE)

(56) Entgegenhaltungen:
- EP-A- 0 525 549
- EP-A- 1 624 166
- WO-A-03/006976
- WO-A-2004/036006
- DE-A1- 4 133 426
- DE-A1- 4 432 837

## Beschreibung

Die Erfindung betrifft eine Vorrichtung und ein Verfahren zur Überprüfung der Funktionsfähigkeit bzw. zur Plausibilisierung eines auf einem Elektrodensystem basierenden Sensors gemäß Patentanspruch 1 bzw. 6.

### Stand der Technik

Aus dem Stand der Technik ist bekannt, dass die Konzentration von leitfähigen Partikeln, beispielsweise Rußpartikeln in einem Abgas, mittels zweier oder mehrerer kammartig ineinander greifender metallischer Elektroden (interdigitales Elektrodensystem, Kammelektrode), die auf einer elektrisch isolierenden keramischen Schicht angeordnet sind, gemessen werden kann. Sensoren, die auf einem derartigen Prinzip beruhen, welches als sammelndes Prinzip einzuordnen ist, werden als resistive Partikelsensoren bezeichnet. Die Messung der Teilchenkonzentration kann dabei durch eine Messung des im Fall von Partikelanlagerung abnehmenden elektrischen Widerstandes der die beiden Elektroden trennenden isolierenden keramischen Schicht erfolgen. Zur Regeneration kann das Sensorelement mit Hilfe einer integrierten Heizvorrichtung von angelagerten Partikeln befreit werden. Dabei wird die Temperatur durch eine Temperaturmessvorrichtung gemessen, die üblicherweise aus Platin besteht. Derartige Sensoren werden von der DE 101 493 33 A1 sowie der WO 2003006976 A2 beschrieben.

Neben entfernbaren Partikeln wie Rußpartikeln lagern sich auf einem Sensorelektrodensystem jedoch auch Partikel ab, die durch Aufheizen nur schlecht oder nicht entfernt werden können. Zu derartigen schlecht oder nicht entfernbaren Partikeln zählen beispielsweise Aschepartikel. Die Ablagerung derartiger schlecht oder nicht entfernbarer Partikel führt zu Vergiftungserscheinungen und zur Beeinträchtigung der Funktion des Sensors. Darüber hinaus können während des Sensorbetriebs einzelne Arme des Elektrodensystems abgelöst oder durchtrennt werden. Dies führt ebenfalls einer Beeinträchtigung der die Funktionsfähigkeit des Sensors.
Während des Betriebes kann ein Sensorelektrodensystem jedoch derzeit weder auf Vergiftungserscheinung noch auf andere Änderungen des Elektrodensystems, die beispielsweise auf dem Ablösen oder Durchtrennen von Elektrodensystemarmen beruhen, überprüft werden.

Aus der EP 1 624166 A1 ist bereits ein Verfahren zum Betreiben einer Brennkraftmaschine bekannt, bei dem die Beladung eines Abgasstroms mit Rußpartikeln erfasst wird. Dabei wird die Leitfähigkeit zwischen zwei Elektroden eines dem Abgasstrom ausgesetzten Partikelsensors erfasst. Zeitweise wird der Partikelsensor auf eine Temperatur erhitzt, bei der am Partikelsensor angelagerte Rußpartikel verbrennen. Die Leitfähigkeit zwischen den Elektroden des Partikelsensors wird während des Erhitzens erfasst und für eine Bewertung des Zustands des Partikelsensors verwendet.

### Offenbarung der Erfindung

### Vorteile der Erfindung

Eine erfindungsgemäße Vorrichtung zur Überprüfung der Funktionsfähigkeit bzw. zur Plausibilisierung eines auf einem interdigitalen Elektrodensystem basierenden Sensors, gemäß Anspruch 1, hat den Vorteil, dass sie eine zuverlässige und kostengünstige Überprüfung der Funktionsfähigkeit eines auf einem interdigitalen Elektrodensystem basierenden Sensors gewährleistet und dabei gegenüber Vergiftungserscheinungen resistent ist.

Der erfindungsgemäße Vorrichtung und das erfindungsgemäße Verfahren können beispielsweise in einem Sensor, der sich im Abgasstrom eines Kraftfahrzeuges mit einem Dieselmotor oder einer Ölheizung befindet, eingesetzt werden. Da in naher Zukunft der Partikelausstoß, insbesondere von Fahrzeugen während des Fahrbetriebes nach dem Durchlaufen eines Motors bzw. Dieselpartikelfilters (DPF), per gesetzlicher Vorschrift überwacht werden muss (On Board Diagnose, OBD), ist die Überwachung des Partikelausstoßes von besonderem Interesse.

### Kurze Beschreibung der Zeichnungen

Ein Ausführungsbeispiel aus dem Stand der Technik und ein Ausführungsbeispiel der Erfindungen sind in den Zeichnungen dargestellt und in der nachfolgenden Beschreibung näher erläutert.
Figur 1 zeigt eine Explosionszeichnung eines auf einem Elektrodensystem basierenden Sensors zur Detektion von Rußpartikeln gemäß dem Stand der Technik.
Figur 2 zeigt eine Explosionszeichnung einer bevorzugten Ausführungsform eines Sensors zur Detektion von Teilchen in einem Gasstrom, insbesondere von Rußpartikeln in einem Abgasstrom, mit enthaltener erfindungsgemäßer Vorrichtung zur Überprüfung der Funktionsfähigkeit bzw. zur Plausibilisierung des Sensors.
Figur 3 zeigt ein Prinzipschaltbild für die erfindungsgemäße Plausibilisierung bzw. Eigendiagnose eines auf einem interdigitalen Elektrodensystem basierenden Sensors.

### Beschreibung der Abbildung

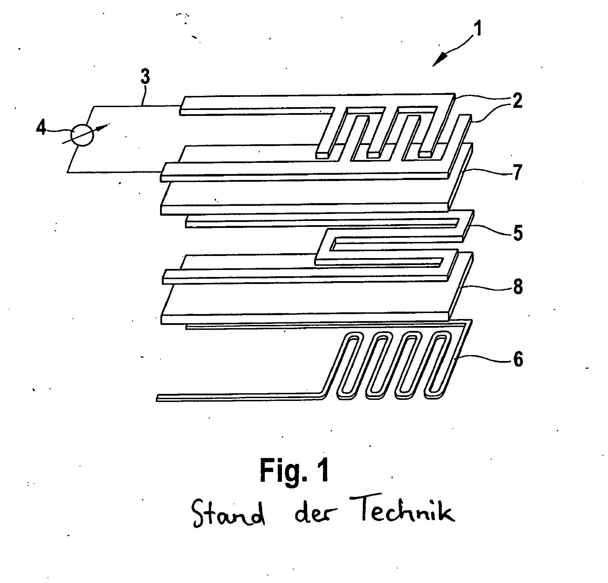

Figur 1 zeigt einen auf einem interdigitalen Elektrodensystem 2 basierenden Sensor 1 zur Detektion von Rußpartikeln gemäß dem Stand der Technik, der ein interdigitales Elektrodensystem 2, eine Heizvorrichtung 5 zur Regeneration des Sensors und eine mäanderförmige Temperaturmessvorrichtung 6 aus Platin zur Bestimmung der Temperatur des Sensors umfasst. Dabei ist das Elektrodensystem 2 zur Messung der Rußpartikelkonzentration über ein Leitungselement 3 an ein Strommessinstrument 4 angeschlossen. Solche Sensoren sind derart aufgebaut, dass sich das Elektrodensystem 2, die Heizvorrichtung 5 und die Temperaturmessvorrichtung 6 nicht berühren, was herkömmlicher Weise durch Einfügen von Schutzschichten 7, 8 erreicht wird.

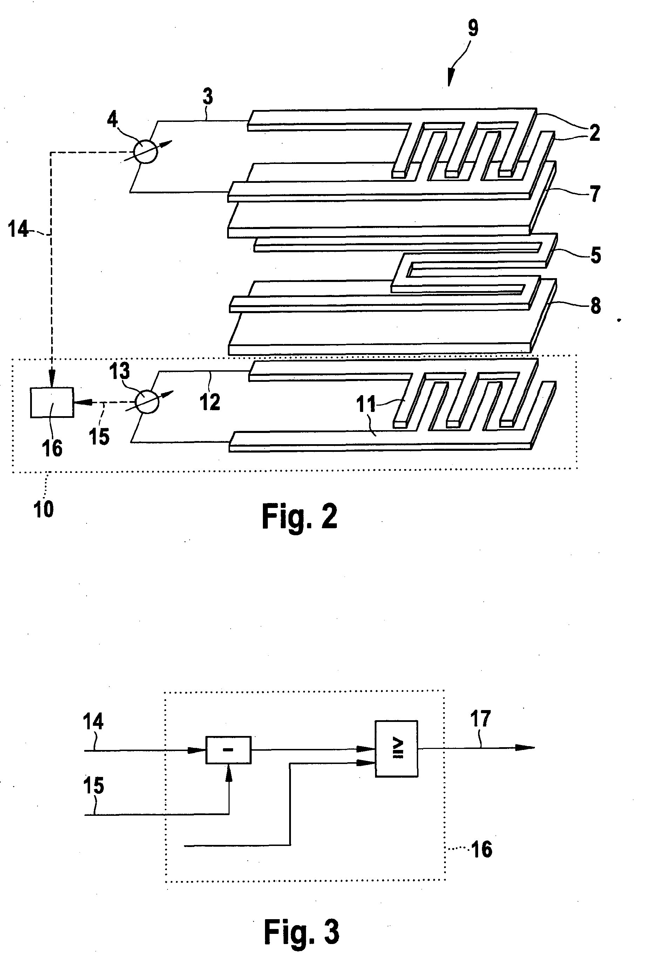

Figur 2 zeigt eine bevorzugte Ausführungsform eines Sensors (9) zur Detektion von Teilchen in einem Gasstrom, insbesondere von Rußpartikeln in einem Abgasstrom, der ein interdigitales Elektrodensystem 2 zur Messung der Teilchenkonzentration, eine Heizvorrichtung 5 zur Regeneration des Sensors und zur Aktivierung der Eigenleitfähigkeit des Sensors sowie eine erfindungsgemäße Vorrichtung zur Überprüfung der Funktionsfähigkeit bzw. zur Plausibilisierung eines auf einem Elektrodensystem basierenden Sensors 10 umfasst. In Analogie zum Stand der Technik ist das Elektrodensystem 2 zur Messung der Teilchenkonzentration über ein Leitungselement 3 an ein Strommessinstrument 4 angeschlossen und das Elektrodensystem 2, die Heizvorrichtung 5 und die erfindungsgemäße Vorrichtung zur Überprüfung der Funktionsfähigkeit bzw. zur Plausibilisierung eines auf einem Elektrodensystem basierenden Sensors 10 werden durch dazwischen eingefügte Schutzschichten 7, 8 getrennt. Die erfindungsgemäße Vorrichtung zur Überprüfung der Funktionsfähigkeit bzw. zur Plausibilisierung eines auf einem Elektrodensystem basierenden Sensors 10 umfasst ein Referenzelektrodensystem 11, das über ein Leitungselement 12 an ein Strommessinstrument 13 angeschlossen ist. Das heißt auf beiden Seiten des Sensors befindet sich je ein, insbesondere interdigitales, Elektrodensystem 2, 11, wobei das Elektrodensystem 2 des Sensors zur Messung des durch die Teilchen erzeugten Stroms verwendet wird und während des Messbetriebes mit einer Messspannung versorgt wird. Das zweite Elektrodensystem 11 dient als Referenzelektrode und bleibt während des Messbetriebes des gegenüberliegenden Elektrodensystems 2 spannungslos. Erst beim Betrieb der erfindungsgemäßen Vorrichtung 10 wird zusätzlich an das Referenzelektrodensystem 11 eine Spannung angelegt und der Sensor und die darin enthaltene Vorrichtung 10 über die Heizvorrichtung 5 auf eine (oder mehrere) definierte Temperatur(en) beheizt. Dabei kann eine definierte Temperatur durch das Einbringen einer definierten Heizleistung in die Heizvorrichtung oder durch eine Temperaturmessung in der Heizvorrichtung erzielt werden. Durch die Eigenleitfähigkeit der Elektrodensysteme 2, 11 fließt in jedem der beiden Elektrodensysteme 2, 11 ein elektrischer Strom. Der elektrische Strom in dem Elektrodensystem 2 wird durch das Strommessinstrument des Elektrodensystems des Sensors 4 und der elektrische Strom in dem Referenzelektrodensystem 11 durch das Strommessinstrument des Referenzelektrodensystems 13 gemessen. Das Strommessinstrument des Elektrodensystems des Sensors 4 gibt ein auf dem gemessenen Stromfluss basierendes Signal 14 und das Strommessinstrument des Referenzelektrodensystems 13 gibt ein auf dem gemessenen Stromfluss basierendes Signal 15 an den ebenfalls in der Vorrichtung 10 enthaltenen Komparator 16. Der Komparator 16 vergleicht das Signal des Strommessinstruments des Elektrodensystems des Sensors 14 mit dem Signal des Strommessinstruments des Referenzelektrodensystems 15.

Der Vergleich des Signals des Strommessinstruments des Elektrodensystems des Sensors 14 mit dem Signal des Strommessinstruments des Referenzelektrodensystems 15 wird ebenfalls in dem in Figur 3 gezeigten Prinzipschaltbild für eine erfindungsgemäße Plausibilisierung bzw.
Eigendiagnose eines auf einem Elektrodensystem basierenden Sensors dargestellt. Das Prinzipschaltbild zeigt, dass, wenn der Vergleich des Signals des Strommessinstruments des Elektrodensystems des Sensors 14 mit dem Signal des Strommessinstruments des Referenzelektrodensystems 15, beispielsweise das Verhältnis des Signals des Strommessinstruments des Elektrodensystems des Sensors 14 zu dem Signal des Strommessinstruments des Referenzelektrodensystems 15 oder die Differenz zwischen dem Signal des Strommessinstruments des Elektrodensystems des Sensors 14 und dem Signal des Strommessinstruments des Referenzelektrodensystems 15, einen Schwellwert überschreitet, der Komparator 16 ein Signal 17 ausgibt, welches anzeigt, dass der Sensor defekt ist.

Gegenstand der vorliegenden Erfindung ist eine Vorrichtung zur Überprüfung der Funktionsfähigkeit bzw. zur Plausibilisierung eines auf einem, insbesondere interdigitalen, Elektrodensystem basierenden Sensors, wobei sie mindestens ein, insbesondere interdigitales, Referenzelektrodensystem, beispielsweise mit mindestens zwei, insbesondere kammartig ineinander greifenden, Elektroden, umfasst. Dabei bedeutet der Begriff "Plausibilisierung" im Rahmen der vorliegenden Erfindung, dass ein konkreter Wert, beispielsweise eines Signals, dahingehend kontrolliert wird, ob er in einem vorgegebenen Wertebereich (plausiblen Wertebereich) liegt.

Vorzugsweise besteht das Referenzelektrodensystem aus einem elektrisch leitfähigen und hochtemperaturstabilen Material. Dabei bedeutet ,,hochtemperaturstabil" im Rahmen der vorliegenden Erfindung, dass das Material bis zu einer Temperatur von beispielsweise etwa 1200 °C keine der für den erfindungsgemäßen Zweck notwendigen Eigenschaften verliert. Für den erfindungsgemäßen Einsatz als elektrisch leitfähiges Material sind Halbleiter oder Metalle, beispielsweise Übergangmetallen wie Platin, Kupfer, Silber, Gold, Eisen, Cobalt, Nickel, Palladium, Ruthenium, Iridium, Rhodium geeignet. Vorzugsweise handelt es sich bei dem elektrisch leitfähigen und hochtemperaturstabilen Material um Platin. Das Referenzelektrodensystem kann mittels Siebdruckverfahren hergestellt werden. Um die Materialkosten für das Referenzelektrodensystem gering zu halten, besteht dieses aus möglichst wenig Material und ist so dünn gestaltet wie es, ohne nachteilige Auswirkungen auf die Messeigenschaften zu haben, möglich ist. Beispielsweise liegt die Schichtdicke des Referenzelektrodensystems in einem Bereich von etwa 1 bis etwa 100 µm.

Da sich an einem spannungslosen Elektrodensystem, aufgrund der fehlenden Elektrophorese, deutlich weniger Teilchen anlagern können, ist an dem Referenzelektrodensystem nur während der Überprüfung der Funktionsfähigkeit bzw. zur Plausibilisierung eines auf einem Elektrodensystem basierenden Sensors eine definierte Spannung, beispielsweise in einem Bereich von etwa 10 bis etwa 70 V angelegt. Zweckmäßiger Weise liegt daher während des Messbetriebes des Sensors keine Spannung an dem Referenzelektrodensystem der erfindungsgemäßen Vorrichtung an.

Neben dem Referenzelektrodensystem umfasst die erfindungsgemäße Vorrichtung weiterhin ein, beispielsweise über ein Leitungselement an das Referenzelektrodensystem angeschlossenes, Strommessinstrument.

Die erfindungsgemäße Vorrichtung umfasst weiterhin einen Komparator, der beispielsweise das Signal, das von dem Strommessinstrument des Referenzelektrodensystems ausgegeben wird und auf dem in dem Referenzelektrodensystem gemessenen Stromfluss basiert, mit einem Signal, das von dem an das Elektrodensystem des Sensors angeschlossenen Strommessinstrument ausgegeben wird und auf dem in dem Elektrodensystem gemessenen Stromfluss basiert, vergleicht und beispielsweise den Sensor als defekt erkennt, sobald die Differenz oder das Verhältnis dieser beiden Signale oberhalb eines zulässigen Schwellwertes liegt.

Erfindungsgemäß kann der Schwellwert der Differenz von dem Signal, das von einem Strommessinstrument des Referenzelektrodensystems ausgegeben wird und auf dem in dem Referenzelektrodensystem gemessenen Stromfluss basiert, und dem Signal, das von einem an das Elektrodensystem eines Sensors angeschlossenen Strommessinstrument ausgegeben wird und auf dem in dem Elektrodensystem gemessenen Stromfluss basiert, entsprechen. Beispielswiese erkennt der Komparator den Sensor als defekt, wenn die Differenz des Signals des Referenzelektrodensystems und des Signals des Sensorelektrodensystems größer als etwa 200 A oder etwa 100 A oder etwa 50 A ist, was beispielsweise einem Schwellwert von etwa 200 A oder etwa 100 A oder etwa 50 A entspricht.

lm Rahmen einer bevorzugten Ausführungsform der Erfindung umfasst die Vorrichtung weiterhin eine, insbesondere isolierende, Schutzschicht, welche beispielsweise mindestens die Oberfläche des Referenzelektrodensystems abdeckt. Eine solche Schutzschicht hat den Vorteil, dass das Referenzelektrodensystem gegenüber Vergiftungen resistent ist. Beispielsweise umfasst die Schutzschicht poröses Al₂O₃.

Ein weiterer Gegenstand der vorliegenden Erfindung ist ein Verfahren zur Überprüfung der Funktionsfähigkeit bzw. zur Plausibilisierung eines auf einem, insbesondere interdigitalen, Elektrodensystem basierenden Sensors, gemäß Anspruch 6.

Hinsichtlich des im Rahmen des erfindungsgemäßen Verfahrens angewandten Schwellwertes wird ausdrücklich auf die Offenbarung im Zusammenhang mit der erfindungsgemäßen Vorrichtung verwiesen.

Im Rahmen einer bevorzugten Ausführungsform des erfindungsgemäßen Verfahrens wird die für die Messung des Stromflusses in dem Referenzelektrodensystem notwendige Spannung vor dem Durchlaufen der Verfahrensschritte a) bis d2) angelegt und nach dem Durchlaufen der Verfahrensschritte a) bis d2) entfernt.

lm Hinblick auf das bevorzugte Material, die bevorzugte Schichtdicke und Herstellung des Elektrodensystem und des Referenzelektrodensystems wird ausdrücklich auf die Offenbarung im Zusammenhang mit dem Referenzelektrodensystem der erfindungsgemäßen Vorrichtung verwiesen.

Zweckmäßigerweise umfasst der Sensor weiterhin mindestens eine isolierende Schicht aus einem isolierenden Material, beispielsweise einer Keramik oder Glas, insbesondere Al₂O₃. Vorteilhafterweise weist die isolierende Schicht eine Schichtdicke in einem Bereich von etwa 0,01 bis etwa 100 µm oder von etwa 0,1 bis etwa 50 µm oder von etwa 1 bis etwa 10 µm auf.

Gegebenenfalls kann an den Elektroden des Sensors ein Plattenkondensator ausgebildet sein. Mittels eines derartigen Plattenkondensators, dessen Platten vorzugsweise parallel zu der isolierenden Schicht ausgebildet sind, sind erhöhte Kapazitäten realisierbar. Zweckmäßiger Weise ist ein solcher Plattenkondensator mit einem Dielektrikum ausgebildet, wobei das Dielektrikum beispielsweise Al₂O₃ sein kann.

Zur Beruhigung des Gasstroms und damit zur bevorzugten Ablagerung von Teilchen auf dem Substrat und zum Schutz des Elektrodensystems vor einer abrasiven Wirkung der Gasströmung, kann der Sensor eine Fanghülse, die zumindest zum Teil das Elektrodensystem überdeckt, aufweisen. Vorteilhafter Weise besteht eine solche Fanghülse aus einem hochisolierenden Werkstoff, beispielsweise aus einer Keramik wie Al₂O₃.

Weitere Vorteile und vorteilhafte Ausgestaltungen des erfindungsgemäßen Gegenstandes sind der Beschreibung, den Zeichnungen und den Patentansprüchen zu entnehmen.

## Patentansprüche

1. Vorrichtung (10) zur Überprüfung der Funktionsfähigkeit bzw. zur Plausibilisierung eines Sensors (9) zur Detektion von Teilchen in einem Gasstrom, wobei der Sensor (9) ein erstes Elektrodensystem (2) und ein an das erste Elektrodensystem (2) angeschlossenes, erstes Strommessinstrument (4) umfasst, wobei die Vorrichtung (10) ein als Referenz dienendes, zweites Elektrodensystem (11), ein an das zweite Elektrodensystem angeschlossenes, zweites Strommessinstrument (13) und einen Kompartor (16) aufweist, wobei jedes der Elektrodensysteme (2, 11) eine unabhängig voneinander messende Einrichtung zur Messung der Teilchenkonzentration darstellt, die jeweils dem Teilchenstrom ausgesetzt ist, und wobei der Komparator (16) dafür eingerichtet ist, das Signal des Strommessinstruments (4) des ersten Elektrodensystems (2) mit dem Signal (15) des Stromrmessinstruments (13) des zweiten Elektrodensystems (11) zu vergleichen und ein Signal anzuzeigen, dass der Sensor defekt ist, falls das Ergebnis des Vergleiches einen Schwellenwert überschreitet.

2. Vorrichtung nach Anspruch 1, **dadurch gekennzeichnet**, das zweite dass Strommessinstrument (13) über ein Leitungselement (12) an dem Referenzelektrodensystem (11) angeschlossen ist.

3. Vorrichtung nach Anspruch 2, **dadurch gekennzeichnet, dass** das erste Strommessinstrument (4) über ein Leitungselement (3) an dem ersten Elektrodensystem (2) anschließbar ist.

4. Vorrichtung nach einem der vorhergehenden Ansprüche, **dadurch gekennzeichnet**, das sie weiterhin eine Schutzschicht umfasst, welche mindestens die Oberfläche des Referenzelektrodensystems (11) abdeckt.

5. Vorrichtung nach Anspruch 4, **dadurch gekennzeichnet**, das die Schutzschicht poröses Al₂O₃ umfasst.

6. Verfahren zur Überprüfung der Funktionsfähigkeit bzw. zur Plausibilisierung eines auf einem Elektrodensystem (2) basierenden Sensors (9) zur Detektion von Teilchen in einem Gasstrom, wobei der Sensor (9) ein erstes Elektrodensystem (2) umfasst, und an einer Vorrichtung (10) zur Überprüfung der Funktionsfähigkeit bzw. zur Plausibilisierung des Sensors (9) angeschlossen ist, wobei die Vorrichtung ein als Referenz dienendes, zweites Elektrodensystem (11) aufweist,
wobei das Verfahren die folgenden Verfahrensschritte umfasst:
a) Messen des Stromflusses in dem ersten Elektrodensystem (2) des auf einem Elektrodensystem (2) basierenden Sensors (9) durch ein an das Elektrodensystem (2) des Sensors (9) angeschlossenes Strommessinstrument (4) und
Messen des Stromflusses in dem zweiten Elektrodensystem (11) durch ein an das Referenzelektrodensystem (11) angeschlossenes Strommessinstrument (13),
b) Ausgabe eines Signals (14) auf Basis des in dem Elektrodensystem (2) des Sensors (9), durch das an dem Elektrodensystem (2) des Sensors (9) angeschlossene Strommessinstrument (4), gemessenen Stromflusses und Ausgabe eines Signals (15) auf Basis des in dem zweiten Elektrodensystem (11), durch das an das zweite Elektrodensystem (11) angeschlossene Strommessinstrument (13), gemessenen Stromflusses;
c) Vergleich des von dem Strommessinstrument (4) des Elektrodensystems (2) des Sensors (9, 10) ausgegebenen Signals (14) mit dem von dem Strommessinstrument (13) des Referenzelektrodensystems (11) ausgegebenen Signals (15) durch einen Komparator (16); und
dl) Ausgabe eines Signals durch den Komparator (16), welches anzeigt, dass der Sensor funktionsfähig ist, falls das Ergebnis des Vergleichs in Verfahrensschritt c) einen Schwellwert unterschreitet, oder
d2) Ausgabe eines Signals durch den Komparator (16), welches anzeigt, dass der Sensor) defekt ist, falls das Ergebnis des Vergleichs in Verfahrensschritt c) diesen Schwellwert überschreitet.

7. Verfahren nach Anspruch 6, **dadurch gekennzeichnet, dass** die für die Messung des Stromflusses in dem Referenzelektrodensystem (11) notwendige Spannung vor dem Durchlaufen der Verfahrensschritte a) bis d2) angeregt und nach dem Durchlaufen der Verfahrensschritte a) bis d2) entfernt wird.

## Claims

1. Device (10) for checking the functionality and the plausibility of a sensor (9) for detecting particles in a gas stream, the sensor (9) comprising a first electrode system (2) and a first current measuring instrument (4) connected to the first electrode system (2), the device (10) having a second electrode system (11) which is used as a reference, a second current measuring instrument (13) connected to the second electrode system and a comparator (16), each of the electrode systems (2, 11) being an independently measuring device for measuring the particle concentration, each of which is exposed to the particle stream, and the comparator (16) being set up to compare the signal from the current measuring instrument (4) of the first electrode system (2) with the signal (15) from the current measuring instrument (13) of the second electrode system (11) and to display a signal indicating that the sensor is defective if the result of the comparison exceeds a threshold value.

2. Device according to Claim 1, **characterized in that** the second current measuring instrument (13) is connected to the reference electrode system (11) via a line element (12).

3. Device according to Claim 2, **characterized in that** the first current measuring instrument (4) can be connected to the first electrode system (2) via a line element (3).

4. Device according to one of the preceding claims, **characterized in that** it also comprises a protective layer which covers at least the surface of the reference electrode system (11).

5. Device according to Claim 4, **characterized in that** the protective layer comprises porous Al₂O₃.

6. Method for checking the functionality and the plausibility of a sensor (9) which is based on an electrode system (2) and is intended to detect particles in a gas stream, the sensor (9) comprising a first electrode system (2) and being connected to a device (10) for checking the functionality and the plausibility of the sensor (9), the device having a second electrode system (11) which is used as a reference,
the method comprising the following method steps:
a) measuring the current flow in the first electrode system (2) of the sensor (9) based on an electrode system (2) by means of a current measuring instrument (4) connected to the electrode system (2) of the sensor (9) and
measuring the current flow in the second electrode system (11) by means of a current measuring instrument (13) connected to the reference electrode system (11),
b) outputting a signal (14) on the basis of the current flow measured in the electrode system (2) of the sensor (9) by means of the current measuring instrument (4) connected to the electrode system (2) of the sensor (9) and
outputting a signal (15) on the basis of the current flow measured in the second electrode system (11) by means of the current measuring instrument (13) connected to the second electrode system (11),
c) comparing the signal (14) output by the current measuring instrument (4) of the electrode system (2) of the sensor (9, 10) with the signal (15) output by the current measuring instrument (13) of the reference electrode system (11) by means of a comparator (16),
and
d1) outputting a signal by means of the comparator (16), which signal indicates that the sensor is functional if the result of the comparison in method step c) undershoots a threshold value, or
d2) outputting a signal by means of the comparator (16), which signal indicates that the sensor is defective if the result of the comparison in method step c) exceeds this threshold value.

7. Method according to Claim 6, **characterized in that** the voltage needed to measure the current flow in the reference electrode system (11) is applied before running through method steps a) to d2) and is removed after running through method steps a) to d2).

## Revendications

1. Dispositif (10) de vérification de l'aptitude au fonctionnement ou de la plausibilité d'un capteur (9) destiné à détecter des particules dans un flux gazeux, dans lequel le capteur (9) comprend un premier système d'électrodes (2) et un premier instrument de mesure de courant (4) raccordé au premier système d'électrodes (2), dans lequel le dispositif (10) comporte un second système d'électrodes (11) jouant le rôle de référence, un second instrument de mesure de courant (13) raccordé au second système d'électrodes et un comparateur (16) dans lequel chacun des systèmes d'électrodes (2, 11) constitue un moyen de mesure indépendant des autres destiné à mesurer la concentration en particules, dont chacun est exposé au flux de particules, et dans lequel le comparateur (16), est conçu pour comparer le signal de l'instrument de mesure de courant (4) du premier système d'électrodes (2) au signal (15) de l'instrument de mesure de courant (13) du second système d'électrodes (11) et pour afficher un signal selon lequel le capteur est défectueux dans le cas où le résultat de la comparaison dépasse une valeur de seuil.

2. Dispositif selon la revendication 1, **caractérisé en ce que** le second instrument de mesure de courant (13) est raccordé au système d'électrodes de référence (11) par l'intermédiaire d'un élément de conduction (12).

3. Dispositif selon la revendication 2, **caractérisé en ce que** le premier instrument de mesure de courant (4) peut être raccordé au premier système d'électrodes (2) par l'intermédiaire d'un élément de conduction (3).

4. Dispositif selon l'une quelconque des revendications précédentes, **caractérisé en ce qu'**il comprend en outre une couche de protection qui recouvre au moins la surface du système d'électrodes de référence (11).

5. Dispositif selon la revendication 4, **caractérisé en ce que** la couche de protection comprend de l'Al₂O₃ poreux.

6. Procédé de vérification de l'aptitude au fonctionnement ou de la plausibilité d'un capteur (9) basé sur un système d'électrodes (2) destiné à détecter des particules dans un flux gazeux, le capteur (9) comprenant un premier système d'électrodes (2) et qui est raccordé à un dispositif (10) de vérification de l'aptitude au fonctionnement ou de la plausibilité du capteur (9), le dispositif comportant un second système d'électrodes (11) jouant le rôle de référence, dans lequel le procédé comprend les étapes de procédé consistant à :
a) mesurer le courant passant dans un premier système d'électrodes (2) du capteur (9) basé sur le système d'électrodes (2) par l'intermédiaire d'un instrument de mesure de courant (4) raccordé au système d'électrodes (2) du capteur (9) et
mesurer le courant passant dans le second système d'électrodes (11) au moyen d'un instrument de mesure de courant (13) raccordé au système d'électrodes de référence (11),
b) délivrer un signal (14) sur la base du courant mesuré passant dans le système d'électrodes (2) du capteur (9) au moyen de l'instrument de mesure de courant (4) raccordé au système d'électrodes (2) du capteur (9), et délivrer un signal (15) sur la base du courant mesuré passant dans le second système d'électrodes (11) par l'intermédiaire de l'instrument de mesure (13) raccordé au second système d'électrodes (11) ;
c) comparer le signal (14) délivré par l'instrument de mesure de courant (4) du système d'électrodes (2) du capteur (9, 10) au signal (15) délivré par l'instrument de mesure de courant (13) du système d'électrodes de référence (11) au moyen d'un comparateur (16) ; et
d1) délivrer un signal par l'intermédiaire du comparateur (16), qui indique que le capteur est apte à fonctionner dans le cas où le résultat de la comparaison effectuée lors de l'étape de procédé c) s'abaisse en dessous d'une valeur de seuil, ou
d2) délivrer un signal par l'intermédiaire du comparateur (16), qui indique que le capteur est défectueux dans le cas où le résultat de la comparaison effectuée lors de l'étape de procédé c) dépasse ladite valeur de seuil.

7. Procédé selon la revendication 6, **caractérisé en ce que** la tension nécessaire pour la mesure du courant passant dans le système d'électrodes de référence (11) est appliquée avant l'exécution des étapes de procédé a) à d2) et est interrompue après l'exécution des étapes de procédé a) à d2).
